# EUROPÄISCHE PATENTSCHRIFT

(11) **EP 1 818 240 B1**
(45) Veröffentlichungstag und Bekanntmachung des Hinweises auf die Patenterteilung: **31.12.2008**
(21) Anmeldenummer: 07001464.2
(22) Anmeldetag: 24.01.2007
(51) Int. Cl.: B62D 3/12, F16H 55/28

(54) **Druckstück für ein Lenkgetriebe**
Pressure yoke for a steering gear
Plaque d'appui pour un mécanisme de direction

(30) Priorität: 10.02.2006 DE 102006006535
(43) Veröffentlichungstag der Anmeldung: 15.08.2007
(73) Patentinhaber: ThyssenKrupp Presta SteerTec GmbH, 40476 Düsseldorf (DE)
(72) Erfinder: Kiforiuk, Alexander, 73061 Ebersbach an der Fils (DE); Lubojatzky, Thomas, 70565 Stuttgart (DE)
(74) Vertreter: Lenzing, Andreas

(56) Entgegenhaltungen:
- EP-A2- 1 184 255
- FR-A1- 2 859 439
- GB-A- 2 333 079
- JP-A- 10 297 504

## Beschreibung

Die vorliegende Erfindung betrifft ein Druckstück für ein Lenkgetriebe nach dem Oberbegriff des Anspruchs 1.

Aus der Praxis des Baus von Fahrzeug-Lenkgetrieben ist es bekannt, eine Zahnstange mittels eines kraftbeaufschlagten Druckstücks gegen ein Lenkritzel zu drücken, um eine Spielfreiheit zwischen Lenkritzel und Zahnstange zu gewährleisten. Das Druckstück ist dabei in Richtung der Kraftbeaufschlagung beweglich ausgestaltet, wobei nach Überschreiten eines bestimmten Wegs ein fester Anschlag erfolgt.

Das Dokument EP 1 184 255 A2 zeigt eine Druckstückanordnung mit einem Toleranzspalt zwischen dem Druckstück und der benachbarten Anschlag, in dem ein Dämpfungsmittel aus einem elastischen Material angeordnet ist.

Das Dokument FR 2 859 439 A1 zeigt ein Druckstück, das auf der der Zahnstange abgewandten Seite abschnittsweise eine Nut aufweist, in die ein Dämpfungsmittel mit konstanter Höhe in Richtung auf den Anschlag eingesetzt ist.

Das Dokument GB-A-2 333 079 zeigt ein Druckstück mit einer Nut, die in die Stirnseite eingestochen ist. Diese Nut dient zur Befestigung eines ringförmigen elastischen Anschlagmittels, das über den Umfang in konstanter Höhe über die Stirnseite hinaus ragt.

Es ist die Aufgabe der Erfindung, ein Druckstück für ein Lenkgetriebe anzugeben, das hinsichtlich Dämpfungseigenschaften, Geräuschentwicklung und Verschleißverhalten auf einfache und kostengünstige Weise verbessert ist.

Diese Aufgabe wird für ein eingangs genanntes Druckstück erfindungsgemäß mit den kennzeichnenden Merkmalen des Anspruchs 1 gelöst.

Es ist vorgeseben, dass das Dämpfungsmittel einer ersten Position seiner Anordnung weiter in den Toleranzspalt hineinreicht als an einer zweiten Position. Hierdurch lässt sich einem bevorzugten Verkippen des Druckstückkörpers in einer Richtung Rechnung tragen, was je nach Betrieb gewünscht sein kann. Insbesondere kann durch solche ein Verkippen eine kontrollierte dauerhafte Anlage des Druckstückkörpers an seitlichen Führungswandungen gegeben sein, was zu einer zusätzlichen Reduzierung von Geräuschquellen führt. Dabei ist das Dämpfungsmittel in einer Nut aufgenommen, wobei die Nut an der ersten Position eine andere Tiefe aufweist als an der zweiten Position. Alternativ oder ergänzend kann es auch vorgesehen sein, dass das Dämpfungsmittel an der ersten Position ein anderes Querschnittsmaß aufweist als an der zweiten Position.

In bevorzugter Ausführung ist das Dämpfungsmittel an dem Druckstückkörper festgelegt. Hierdurch wird die Herstellung des erfindungsgemäßen Druckstücks begünstigt, da der Druckstückkörper im allgemeinen aufwendig in einer Bearbeitungsmaschine hergestellt wird, so dass im Zuge seiner Formgebung bereits die entsprechenden Mittel zur Anordnung des Dämpfungsmittels vorgesehen werden können. Insbesondere bevorzugt ist das Dämpfungsmittel dabei formschlüssig in einer Ausnehmung der zweiten Stirnseite des Druckstückkörpers eingesetzt.

Allgemein bevorzugt umfasst das Dämpfungsmittel eine Mehrzahl von separaten Dämpfungsstücken. Hierdurch lässt sich je nach gegebenen Anforderungen die Gegenkraft des Dämpfungsmittels klein halten. Alternativ kann es jedoch auch vorgesehen sein, dass das Dämpfungsmittel als im wesentlichen ringförmiger Körper ausgebildet ist. Hierdurch ist eine einfache Herstellung und Montage von Druckstückkörper und Dämpfungsmittel gegeben, wobei zudem je nach Anforderungen große Gegenkräfte durch das Dämpfungsmittel erzeugt werden können. Das Dämpfungsmittel muss nicht notwendig ein geschlossener Ring sein, sondern kann auch als offener Ring ausgebildet sein, insbesondere als länglicher Abschnitt, der ringförmig in eine entsprechende nutartige Ausnehmung in Druckstückkörper oder Anschlagmittel eingesetzt ist. Ein solcher offener Ring kann auch einen Spalt zwischen seinen Enden aufweisen, so dass bei einer Änderung der Temperatur eine entsprechende Ausdehnung des Dämpfungsmittels ermöglicht ist, ohne dass ein Ausweichen des elastischen Materials in Richtung des Toleranzspalts zwischen Druckstückkörper und Anschlagmittel stattfindet.

Besonders bevorzugt durchgreift das Dämpfungsmittel den Toleranzspalt in jedem Betriebszustand des Druckstücks vollständig und berührt jedes der beiden, Drückstückkörper und Anschlagmittel. Hierdurch ist eine besonders gute Dämpfung gewährleistet. Das Dämpfungsmittel kann dabei durchaus mit einer leichten Vorspannung in dem Toleranzspalt angeordnet sein.

In einer bevorzugten Ausführungsform weist das Dämpfungsmittel einen Ausweichraum auf, wobei der Ausweichraum durch eine Deformation des Dämpfungsmittels im Zuge einer Auslenkung des Druckstücks verkleinert wird. Hierdurch ist mit einfachen Mitteln eine Blockade oder ein übermäßiger Anstieg einer durch das Dämpfungsmittel bedingten Gegenkraft bei einer maximalen Auslenkung des Druckstückkörpers aus seiner Grundposition vermieden. Das Material des Dämpfungsmittels kann hierdurch inkompressibel sein. In besonders bevorzugter Ausführung weist das Dämpfungsmittel dabei einen über einem von beiden, Druckstückkörper oder Anschlagmittel, vorstehenden Steg auf, wobei benachbart des Stegs wenigstens eine Ausnehmung in dem Dämpfungsmittel vorgesehen ist, die zur Ausformung des Ausweichraums hinter dem Druckstückkörper oder Anschlagmittel zurückbleibt. Somit kann der Steg bei einer Kraftbeaufschlagung durch Auslenkung des Druckstücks im Zuge der elastischen Verformbarkeit des Dämpfungsmittels in den Ausweichraum ausweichen. Hierdurch kann die zweite Stirnfläche des Druckstückkörpers vollständig gegen das Anschlagmittel anliegen, ohne dass das Dämpfungsmittel zwischen diesen Elementen verbleibt.

In einer vorteilhaften Ausführungsform weist zumindest der in den Toleranzspalt ragende Teil des Dämpfungsmittels eine sich verjüngende, insbesondere im wesentlichen dreieckige Querschnittsform auf. Hierdurch ist auf einfache Weise eine zunächst kleine und bei weiterer Auslenkung des Druckstückkörpers überproportional anwachsende Gegenkraft durch das Dämpfungsmittel erzielt.

In allgemein bevorzugter Ausführung besteht das Dämpfungsmittel aus Ethylen-Propylen-Dien-Kautschuk (EPDM) oder aus Nitrilkautschuk (NBR). Diese Materialien sind für die beschriebenen Zwecke gut geeignet und werden allgemein für besonders geformte Dichtungsringe verwendet, so dass Dämpfungsmittel aus diesen Materialien kostengünstig herstellbar sind.

In einer weiteren bevorzugten Ausführungsform ist das Dämpfungsmittel mit dem Druckstückkörper oder Anschlagmittel haftend verbunden. Hierdurch lässt sich ein wandern des Dämpfungsmittels während des Betriebs vermeiden und gegebenenfalls kann auf kostenintensive Herstellungsschritte wie das Vorsehen einer Nut zur formschlüssigen Aufnahme verzichtet werden. Besonders vorteilhaft ist dabei das Dämpfungsmittel an den Druckstückkörper oder das Anschlagmittel angespritzt, so dass Ausformung des Dämpfungsmittels und Verbindung mit Druckstückkörper oder Anschlagmittel in einem einzigen Arbeitsgang erfolgen können. Insbesondere dann, wenn es sich bei dem Material des Dämpfungsmittels um ein Gummi handelt, kann es sich bei der Verbindung auch um ein Aufvulkanisieren handeln, so dass auf an sich bekannte Weise eine Gummi-Metall-Verbindung geschaffen wird. Bei geeigneter Formgebung kann das Dämpfungsmittel somit auch auf eine oberste plane Oberfläche von Druckstück oder Anschlagmittel aufgebracht werden. Hierdurch werden besondere Formgebungen von Anschlagmittel oder Druckstück überflüssig.

Weitere Vorteile und Merkmale des erfindungsgemäßen Druckstücks ergeben sich aus den nachfolgend beschriebenen Ausführungsbeispielen sowie den abhängigen Ansprüchen.

Nachfolgend wird ein bevorzugtes Ausführungsbeispiel eines erfindungsgemäßen Druckstücks beschrieben und anhand der anliegenden Zeichnungen näher erläutert.
- Fig. 1: zeigt eine schematische Darstellung der Anordnung eines in einem Gehäuse geführten Druckstücks, das an einer Zahnstange anliegt.
- Fig. 2: zeigt einen Querschnitt durch eine Ausführungsform eines Druckstücks.
- Fig. 3: zeigt eine Ausschnittsvergrößerung des Details A aus Fig. 2.
- Fig. 4: zeigt eine räumliche Ansicht einer zweiten Stirnseite des Druckstücks aus Fig. 2.
- Fig. 5: zeigt eine Draufsicht auf die zweite Stirnseite eines Druckstücks gemäß einer zweiten Ausführungsform.
- Fig. 6: zeigt eine Ausschnittsvergrößerung eines Querschnitts durch ein Druckstück gemäß einer dritten Ausführungsform.
- Fig. 7: zeigt eine Ausschnittsvergrößerung eines Querschnitts durch ein Druckstück gemäß einer vierten Ausführungsform.
- Fig. 8: zeigt einen Querschnitt durch ein enfindungsgemäßes Druckstück gemäß einer bevorzugten Ausführungsform.

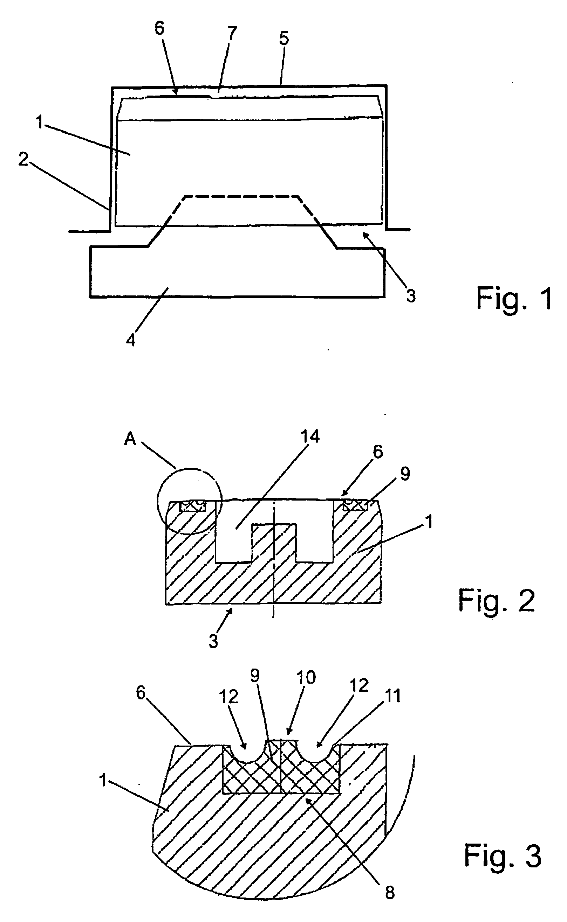

Allgemein ist ein Druckstück für ein Lenkgetriebe gemäß der schematischen Darstellung nach Fig. 1 ausgebildet. Dabei ist ein Druckstückkörper 1 mit einer zylindrischen Außenwandung in einem Druckstückgehäuse 2 längsversohieblich geführt. Eine erste Stirnseite 3 des Druckstückkörpers 1 ist gegenüber einer Zahnstange 4 angeordnet, wobei der Druckstückkörper 1 mittels geeigneter Wirkflächen eine Andruckkraft auf die Zahnstange 4 ausübt. Diese Andruckkraft wird durch eine Schraubenfeder (nicht dargestellt) erzeugt, die zwischen dem Druckstückkörper 1 und einem ein Anschlagmittel bildenden Boden 5 des Druckstückgehäuses 2 vorgespannt angeordnet ist. Die Schraubenfeder ist in einer Ausnehmung 14 des Druckstückkörpers 1 aufgenommen.

Dem Boden 5 liegt eine zweite Stirnseite 6 des Druckstückkör pers 1 gegenüber, wobei in einem vollständig in Richtung der Zahnstange ausgelenkten Zustand des Druckstückkörpers 1 ein Toleranzspalt 7 zwischen dem Boden 5 und dem Druckstückkörper 1 verbleibt. Dieser Toleranzspalt 7 definiert den maximalen Hub des Druckstückkörpers 1. Der Toleranzspalt 7 hat in der Praxis eine typische Breite zwischen 0,1 und 0,3 mm.

Im Zuge der Betätigung eines nicht dargestellten Lenkritzels ergeben sich bei der Kämmung des Lenkritzels und der Zahnstange Kräfte, die die Zahnstange von dem Lenkritzel wegdrücken. Hierdurch wird der Druckstückkörper 1 zunächst in Richtung des Bodens 5 bewegt, bis nach Überschreiten des Toleranzwegs der Druckstückkörper 1 an dem Boden 5 anschlägt und keine weitere Entkämmung von Lenkritzel und Zahnstange 4 mehr zulässt.

Bei dem nicht erfindungsgemäßen Druckstückkörper 1 gemäß Fig. 2 weist die zweite Stirnseite 6 eine ringförmige Nut 8 auf, in die ein Dämpfungsmittel 9 eingelegt ist. Das Dämpfungsmittel 9 besteht aus Ethylen-Propylen-Dien-Kautschuk.

Bei der ersten Ausführungsform ist das Dämpfungsmittel als geschlossener Ring von konstantem Querschnitt ausgebildet. Die genaue Querschnittsform des Dämpfungsmittels ist in Fig. 3 verdeutlicht. In einem dem Druckstückkörper 1 zugewandten Bereich hat das Dämpfungsmittel 9 einen rechteckigen Querschnitt, mittels dessen es formschlüssig in die ebenfalls einem rechteckigen Querschnitt aufweisende Nut 8 eingelegt ist. Im Bereich der zweiten Stirnseite 6 des Druckstückkörpers 1 hat das Dämpfungsmittel 9 einen Steg 10, der über die Ebene der Stirnfläche 6 des Druckstückkörpers 1 hervorspringt. Insbesondere beträgt die Größe dieses Vorsprungs etwa der Größe des Toleranzspalts 7, so dass der Steg 10 auch bei einer maximalen Auslenkung des Druckstückkörpers in Richtung der Zahnstange 4 den gegenüberliegenden Boden 5 berührt.

In seinen Randbereichen 11 schließt das Dämpfungsmittel 9 bündig mit der Stirnfläche 6 ab. Beidseitig des zentralen Stegs 10 hat das Dämpfungsmittel 9 vorliegend halbkrcisförmige Ausnehmungen 12, die hinter der Ebene der Stirnfläche 6 zurückbleiben.

Wird nun der Druckstückkörper 1 gegen den Boden 5 bewegt und somit der Toleranzspalt 7 verkleinert, so quetscht sich das elastische Dämpfungsmittel 9 im Bereich seines Stegs 10 zunehmend zusammen, wobei das elastische Material im Zuge der Deformation in die Ausweichräume 12 ausweicht. Hierdurch wird eine übermäßige Zunahme der Gegenkraft des zwar elastischen, aber wenig kompressiblen Dämpfungsmittels 9 vermieden.

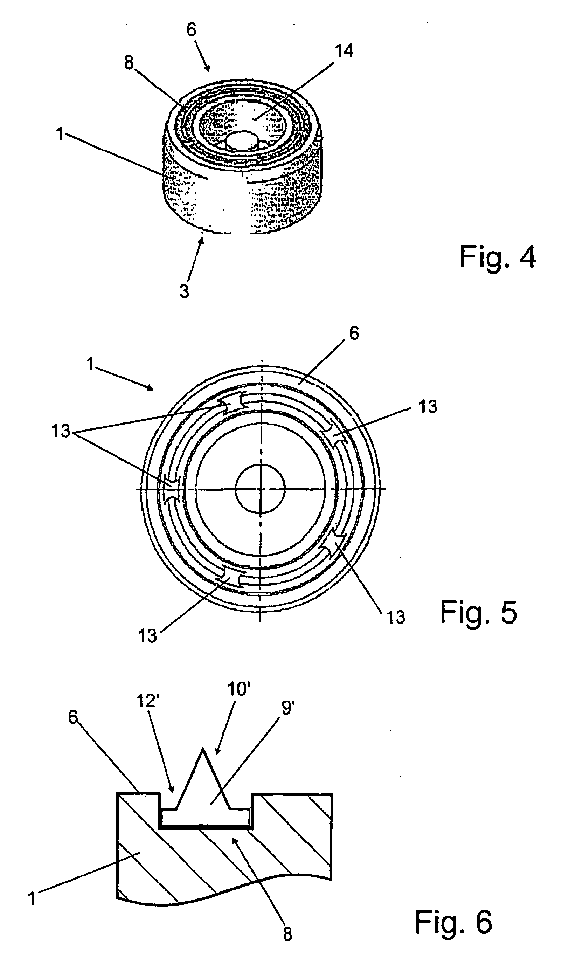

Gemäß einer zweiten nicht erfindungsgemäßen Ausführungsform (siehe Fig. 5) besteht das Dämpfungsmittel 9 nicht aus einem Ring, sondern aus einer Anzahl von vorwiegend fünf jeweils gleichförmigen Abschnitten 13. Diese können jeweils in separate Ausnehmungen der Stirnseite 6 des Druckstückkörpers 1 eingesetzt sein oder auch in eine durchgehende Ringnut wie im Falle des ersten Ausführungsbeispiels. In letzterem Fall ist durch geeignete Klemmung der Dämpfungsmittelstücke 13 sicher zu stellen, dass diese sich nicht entlang der Nut bewegen können. Die Querschnittsform der Stücke 13 entspricht der Querschnittsform nach Fig. 3.

In dem dritten nicht erfindungsgemäßen Ausführungsbeispiel gemäß Fig. 6 ist der Dämpfungskörper wie im ersten Beispiel ringförmig ausgebildet, jedoch liegt eine geänderte Querschnittsform des Dämpfungsmittels 9' vor. Dabei ist der über die Stirnseite 6 hinausragende Steg 10' von im wesentlichen dreieckiger Querschnittsform. Die Ansätze des Stegs 10' bleiben in der Höhe hinter der Stirnfläche 6 zurück, so dass hierdurch analog zu dem ersten Ausführungsbeispiel Ausweichräume 12' ausgebildet werden. Bei dem dritten Ausführungsbeispiel liegt ein insbesondere stärker als linearer Anstieg der durch das Dämpfungsmittel 9' bewirkten Gegenkraft vor. Hierdurch lässt sich die Kraft-Weg-Kurve des Druckstückkörpers 1 besonders variabel gestalten.

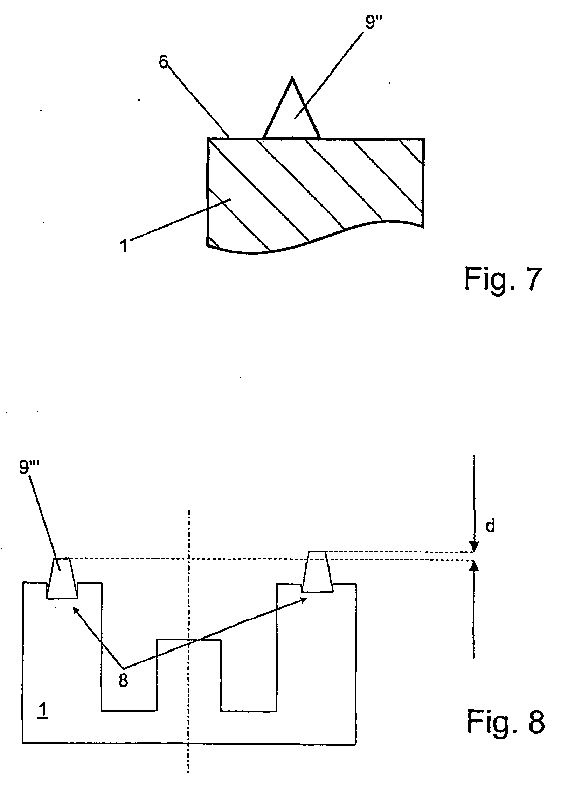

Gemäß der vierten Ausführungsform nach Fig. 7 kann ein Dämpfungsmittel 9'' von dreieckigem oder anderem geeigneten Querschnitt auch unmittelbar auf eine plane Oberfläche des Druckstücks oder Anschlagmittels aufgebracht sein. Dies kann -je nach Material- insbesondere durch Anspritzen oder Aufvulkanisieren erfolgen. Bei ausreichender Verformung bzw. Auslenkung des Druckstücks kann das Material des Dämpfungsmittels kaum noch Ausweichen, so dass auch durch das Dämpfungsmittel selbst eine beliebig große Kraft vom Anschlagmittel auf das Druckstück übertragbar ist. Ein Anschlagen der metallischen Teile von Druckstück und Anschlagmittel ist dann nicht unbedingt erforderlich, um eine entsprechende Verkämmung von Zahnstange und Ritzel zu gewährleisten. Insbesondere vorteilhaft kann bei einer Ausführung nach Fig. 7 auf eine Nut (siehe etwa Nut 8 in Fig. 6) verzichtet werden.

Ein erfindungagemäßes Ausführungsbeispiel ist in Fig. 8 dargestellt. Es handelt sich dabei um ein ringartiges Dämpfungsmittel 9''' mit trapezförmigem bzw. annähernd dreieckigem Querschnitt. Wie der Querschnitt durch den Druckstückkörper 1 zeigt, steht das Dämpfungsmittel an einer Stelle (links in der Zeichnung) weniger weit in den Toleranzspalt vor als an einer gegenüberliegenden Position, woraus der dargestellte Höhenunterschied d resultiert. Bei der vorliegenden Ausführung wurde dieser Symmetriebruch dadurch realisiert, dass die Nut 8 über ihren Umlauf um die Stirnfläche unterschiedlich tief ausgebildet ist (in Fig. 8 auf der linken Seite tiefer als auf der rechten Seite). Alternativ oder ergänzend kann sich auch der Querschnitt des Dämpfungsmittels 9''' über seinen Verlauf ändern. In Anlehnung an Fig. 5 können zur Erlangung des gleichen Effekts auch verschiedene Stücke des Dämpfungsmittels in Ihrer Größe variieren.

Bei der erfindungsgemäßen Ausführung gemäß Fig. 8 erfährt der Druckstückkörper ein Moment senkrecht zu seiner Bewegungsrichtung, so dass er in Verkippung an den ihn führenden Wänden anliegt.

Die verschiedenen Aspekte der unterschiedlichen nicht enfindungsgemäßen Ausführungsbeispiele können je nach Anforderungen mit dem Ausführungsbeispiel nach Fig. 8 kombiniert werden.

## Patentansprüche

1. Druckstück für ein Lenkgetriebe, umfassend
einen in einer Andruckrichtung beweglich geführten Druckstückkörper (1),
wobei der Druckstückkörper (1) eine erste, einer Zahnstange (4) gegenüberliegende Stirnseite (3) aufweist,
wobei der Druckstückkörper (1) eine zweite, einem Anschlagmittel (5) gegenüberliegende Stirnseite (6) aufweist, wobei ein Toleranzspalt (7) zwischen Druckstückkörper (1) und Anschlagmittel (5) vorgesehen ist, und
an einem von beiden, Druckstückkörper (1) oder Anschlagmittel (5), ein in den Toleranzspalt (7) ragendes Dämpfungsmittel (9, 9') aus einem elastischen Material angeordnet ist
**dadurch gekennzeichnet, dass**
das Dämpfungsmittel an einer ersten Position seiner Anordnung weiter in den Toleranzspalt hineinreicht als an einer zweiten Position und dass das Dämpfungsmittel in einer Nut aufgenommen ist, wobei die Nut an der ersten Position eine andere Tiefe aufweist als an der zweiten Position.

2. Druckstück nach Anspruch 1, **dadurch gekennzeichnet, dass** das Dämpfungsmittel (9, 9') an dem Druckstückkörper (1) festgelegt ist.

3. Druckstück nach Anspruch 2, **dadurch gekennzeichnet, dass** das Dämpfungsmittel (9, 9') formschlüssig in eine Ausnehmung (8) der zweiten Stirnseite (6) eingesetzt ist.

4. Druckstück nach einem der vorhergehenden Ansprüche, **dadurch gekennzeichnet, dass** das Dämpfungsmittel eine Mehrzahl von separaten Dämpfungsstücken (13) umfasst.

5. Druckstück nach einem der Ansprüche 1 bis 3, **dadurch gekennzeichnet, dass** das Dämpfungsmittel (9, 9') als im wesentlichen ringförmiger Körper ausgebildet ist.

6. Druckstück nach einem der vorhergehenden Ansprüche, **dadurch gekennzeichnet, dass** das Dämpfungsmittel (9, 9') den Toleranzspalt (7) in jedem Betriebszustand des Druckstücks vollständig durchgreift und jedes der beiden, Druckstückkörper (1) und Anschlagmittel (5), berührt.

7. Druckstück nach einem der vorhergehenden Ansprüche, **dadurch gekennzeichnet, dass** das Dämpfungsmittel (9, 9') einen Ausweichraum (12, 12') aufweist, wobei der Ausweichraum (12, 12') durch eine Deformation des Dämpfungsmittels (9, 9') im Zuge einer Auslenkung des Druckstückkörpers (1) verkleinert wird.

8. Druckstück nach Anspruch 7, **dadurch gekennzeichnet, dass** das Dämpfungsmittel einen über einem von beiden, Druckstückkörper (1) oder Anschlagmittel (5), vorstehenden Steg (10, 10') aufweist, wobei benachbart des Stegs (10, 10') wenigstens eine Ausnehmung (12, 12') in dem Dämpfungsmittel (9, 9') vorgesehen ist, die zur Ausformung des Ausweichraums hinter dem Druckstückkörper (1) oder Anschlagmittel (5) zurückbleibt.

9. Druckstück nach einem der vorhergehenden Ansprüche, **dadurch gekennzeichnet, dass** zumindest der in den Toleranzspalt (7) ragende Teil (10') des Dämpfungsmittels eine sich verjüngende, insbesondere im wesentlichen dreieckige Querschnittsform aufweist.

10. Druckstück nach einem der vorhergehenden Ansprüche, **dadurch gekennzeichnet, dass** das Dämpfungsmittel aus Ethylen-Propylen-Dien-Kautschuk (EPDM) oder aus Nitrilkautschuk (NBR) besteht.

11. Druckstück nach einem der vorhergehenden Ansprüche, **dadurch gekennzeichnet, dass** das Dämpfungsmittel mit dem Druckstückkörper (1) oder Anschlagmittel (5) haftend verbunden ist.

12. Druckstück nach Anspruch 11, **dadurch gekennzeichnet, dass** das Dämpfungsmittel an den Druckstückkörper (1) oder das Anschlagmittel (5) angespritzt ist.

13. Druckstück nach Anspruch 11, **dadurch gekennzeichnet, dass** das Dämpfungsmittel auf den Druckstückkörper (1) oder das Anschlagmittel (5) aufvulkanisiert ist.

14. Druckstück nach einem der vorhergehenden Ansprüche, **dadurch gekennzeichnet, dass** das Dämpfungsmittel an der ersten Position ein anderes Querschnittsmaß aufweist als an der zweiten Position.

## Claims

1. Pressure element for a steering gear, comprising
a pressure element body (1) guided in a movable manner in a direction of pressure,
wherein the pressure element body (1) has a first face side (3) located opposite a toothed rod (4),
wherein the pressure element body (1) has a second face side (6) located opposite a stop means (5),
wherein a tolerance gap (7) is provided between the pressure element body (1) and stop means (5) and damping means (9, 9') made of an elastic material is arranged projecting into the tolerance gap (7) at one of the two, pressure element body (1) or stop means (5),
**characterised in that**
the damping means in a first position of its arrangement projects further into the tolerance gap than in a second position, and **in that** the damping means is accommodated in a groove, wherein the groove at the first position has a different depth than at the second position.

2. Pressure element according to Claim 1, **characterised in that** the damping means (9, 9') is secured to the pressure element body (1).

3. Pressure element according to Claim 2, **characterised in that** the damping means (9, 9') is inserted in positive fit into a cut-out (8) of the second face side (6).

4. Pressure element according to any one of the preceding claims, **characterised in that** the damping means comprises a plurality of separate damping elements (13).

5. Pressure element according to any one of Claims 1 to 3, **characterised in that** the damping means (9, 9') is designed as an essentially ring-shaped body.

6. Pressure element according to any one of the preceding claims, **characterised in that** the damping means (9, 9') engages fully through the tolerance gap (7) in every operational state of the pressure element and comes in contact with each of the two, pressure element body (1) and stop means (5).

7. Pressure element according to any one of the preceding claims, **characterised in that** the damping means (9, 9') has a deviation space (12, 12'), wherein the deviation space (12, 12') is rendered smaller by a deformation of the damping means (9, 9') in the course of a deflection of the pressure element body (1).

8. Pressure element according to Claim 7, **characterised in that** the damping means has a web (10, 10') projecting over one of the two, pressure element body (1) or stop means (5), wherein adjacent to the web (10, 10') at least one cut-out (12, 12') is provided in the damping means (9, 9'), which remains behind the pressure element body (1) or stop means (5) to form the deviation space.

9. Pressure element according to any one of the preceding claims, **characterised in that** at least the part (10') of the damping means projecting into the tolerance gap (7) has a tapering cross-section form, in particular essentially triangular in shape.

10. Pressure element according to any one of the preceding claims, **characterised in that** the damping means consists of ethylene-propylene-diene rubber (EPDM) or of nitrile rubber (NBR).

11. Pressure element according to any one of the preceding claims, **characterised in that** the damping means is adhesively connected to the pressure element body (1) or stop means (5).

12. Pressure element according to Claim 11, **characterised in that** the damping means is gated onto the pressure element body (1) or the stop means (5).

13. Pressure element according to Claim 11, **characterised in that** the damping means is vulcanised onto the pressure element body (1) or the stop means (5).

14. Pressure element according to any one of the preceding claims, **characterised in that** the damping means at the first position has a different cross-section dimension than at the second position.

## Revendications

1. Pièce d'appui pour une transmission de direction, comprenant,
un corps de pièce d'appui (1) guidé de manière mobile dans une direction d'appui,
le corps de pièce d'appui (1) présentant une première face frontale (3) en regard d'une crémaillère (4),
le corps de pièce d'appui (1) présentant une deuxième face frontale (6) en regard d'un moyen de butée (5), un interstice de tolérance (7) étant prévu entre le corps de pièce d'appui (1) et le moyen de butée (5), et
un moyen d'amortissement (9, 9') en un matériau élastique, qui s'engage dans l'interstice de tolérance (7), étant prévu sur l'un des deux éléments corps de pièce d'appui (1) ou moyen de butée (5),
**caractérisée en ce que**
le moyen d'amortissement, au niveau d'une première position de son agencement, s'engage davantage dans l'interstice de tolérance qu'au niveau une deuxième position, et **en ce que** le moyen d'amortissement est reçu dans une rainure, la rainure présentant au niveau de la première position, une autre profondeur qu'au niveau de la deuxième position.

2. Pièce d'appui selon la revendication 1, **caractérisée en ce que** le moyen d'amortissement (9, 9') est fixé ou immobilisé sur le corps de pièce d'appui (1).

3. Pièce d'appui selon la revendication 2, **caractérisée en ce que** le moyen d'amortissement (9, 9') est placé par complémentarité de formes dans un évidement (8) de la deuxième face frontale (6).

4. Pièce d'appui selon l'une des revendications précédentes, **caractérisée en ce que** le moyen d'amortissement englobe une pluralité de pièces d'amortissement (13) séparées.

5. Pièce d'appui selon l'une des revendications1 à 3, **caractérisée en ce que** le moyen d'amortissement (9, 9') est réalisé en tant que corps sensiblement de forme annulaire.

6. Pièce d'appui selon l'une des revendications précédentes, **caractérisée en ce que** le moyen d'amortissement (9, 9') traverse en totalité l'interstice de tolérance (7) dans chaque état de fonctionnement de la pièce d'appui, et est en contact avec chacun des deux éléments corps de pièce d'appui (1) et moyen de butée (5).

7. Pièce d'appui selon l'une des revendications précédentes, **caractérisée en ce que** le moyen d'amortissement (9, 9') présente un espace de dégagement (12, 12'), l'espace de dégagement (12, 12') étant amenuisé par une déformation du moyen d'amortissement (9, 9') au cours d'une déviation du corps de pièce d'appui (1).

8. Pièce d'appui selon la revendication 7, **caractérisée en ce que** le moyen d'amortissement présente une nervure (10, 10') faisant saillie de l'un des deux éléments corps de pièce d'appui (1) ou moyen de butée (5), au moins un évidement (12, 12') étant prévu dans le moyen d'amortissement (9, 9') au voisinage de la nervure (10, 10'), cet évidement restant en retrait derrière le corps de pièce d'appui (1) ou le moyen de butée (5) pour former l'espace de dégagement.

9. Pièce d'appui selon l'une des revendications précédentes, **caractérisée en ce qu'**au moins la partie (10') du moyen d'amortissement, qui s'engage dans l'interstice de tolérance (7), présente une forme de section transversale, qui se rétrécit, notamment une forme sensiblement triangulaire.

10. Pièce d'appui selon l'une des revendications précédentes, **caractérisée en ce que** le moyen d'amortissement est réalisé en un caoutchouc éthylène-propylène-diène (EPDM) ou en un caoutchouc acrylonitrile (NBR).

11. Pièce d'appui selon l'une des revendications précédentes, **caractérisée en ce que** le moyen d'amortissement est lié ou assemblé par adhésion au corps de pièce d'appui (1) ou au moyen de butée (5).

12. Pièce d'appui selon la revendication 11, **caractérisée en ce que** le moyen d'amortissement est rapporté par moulage par injection sur le corps de pièce d'appui (1) ou le moyen de butée (5).

13. Pièce d'appui selon la revendication 11, **caractérisée en ce que** le moyen d'amortissement est rapporté par vulcanisation sur le corps de pièce d'appui (1) ou le moyen de butée (5).

14. Pièce d'appui selon l'une des revendications précédentes, **caractérisée en ce que** le moyen d'amortissement présente au niveau de la première position, une autre dimension de section transversale qu'au niveau de la deuxième position.
